# EUROPEAN PATENT APPLICATION

(11) **EP 1 599 028 A2**
(43) Date of publication of application: **23.11.2005**
(21) Application number: 05251202.7
(22) Date of filing: 28.02.2005
(51) Int. Cl.: H04M 11/06

(54) **ADSL communication method, apparatus and program**

(30) Priority: 20.05.2004 JP 2004150703
(71) Applicant: Mitsumi Electric Co., Ltd., Tama-shi, Tokyo 206-8567 (JP)
(72) Inventor: Kouji, Ohtsuka, Mitsumi Electric Co., Ltd., Atsugi-shi Kanagawa 243-8533 (JP)
(74) Representative: Rees, Alexander Ellison

(57) **Abstract**

An ADSL modem of an ADSL communication apparatus is connected to an ADSL modem in a circuit base station by using existing telephone lines and ADSL communication techniques, and a provider connected to the ADSL modem in the circuit base station is connected to the ADSL communication apparatus to perform communications with each other. A transmission bit rate of receive data is measured in the ADSL modem of the ADSL communication apparatus. When the measured transmission bit rate is lower than a target transmission bit rate, the ADSL modem of the ADSL communication apparatus and the ADSL modem in the circuit base station are disconnected from each other so as to attempt reconnection.

## Description

### BACKGROUND OF THE INVENTION

### 1. Field of the Invention

The present invention generally relates to ADSL communication methods, ADSL communication apparatuses, and ADSL communication programs, and more particularly to, an ADSL communication method, an ADSL communication apparatus, and an ADSL communication program that connect an ADSL modem of the ADSL communication apparatus to an ADSL modem in a circuit base station by using existing telephone lines and ADSL communication techniques.

### 2. Description of the Related Art

In generally used ADSL (Asymmetric Digital Subscriber Lines), data communications are performed between a user terminal and an ISP (Internet Service Provider) of a DSL service by using a high frequency band that does not affects bands used in telephone services by using existing telephone lines.

Such ADSL communication apparatuses include an IP-STB (Internet Protocol-Set Top Box). The IP-STB is installed in, for example, a home or a hotel. When a user accesses, for example, a desired Web site or streaming content by operating a remote controller, the IP-STB displays the screen.

In addition, conventional ADSL communication apparatuses include, for example, a device disclosed in Japanese Laid-open Patent Application No. 2004-15274. In this application, it is disclosed that a communication control part, which performs communications with a management device of a provider and is connected to an ADSL modem via a circuit I/F part, displays on a display part the transmission bit rate of data transmitted and received in the communications with the management device.

The transmission bit rate in an ADSL communication apparatus is determined by a training process, which is performed when establishing a connection between an ADSL modem of the ADSL communication apparatus and an ADSL modem in a circuit base station.

However, the transmission bit rate determined in the training process depends on the circuit (line) state at the time when the training process is performed. Thus, when the training process is performed at the time point when the circuit (line) state happens to be degraded, the transmission bit rate is determined to be a low transmission bit rate. Even if the circuit state is recovered afterward, communication can be performed only in the low transmission bit rate.

Generally, an ADSL modem includes a setting diagnosing function, and is capable of performing displaying the circuit state such as the transmission bit rate from an ADSL communication apparatus and the S/N ratio, and of attempting reconnection. However, there is a problem in that a user has to determine whether the transmission bit rate is good or not by himself/herself, and to attempt reconnection.

### SUMMARY OF THE INVENTION

A general object of the present invention is to provide an improved and useful ADSL communication method, ADSL communication apparatus, and ADSL communication program in which one or more of the above-mentioned problems are eliminated.

Another and more specific object of the present invention is to provide an ADSL communication method, an ADSL communication apparatus, and an ADSL communication program that can automatically set a transmission bit rate close to the maximum transmission rate in accordance with the circuit state.

In order to achieve the above-mentioned objects, according to one aspect of the present invention, there is provided an ADSL communication method of connecting an ADSL modem of an ADSL communication apparatus to an ADSL modem in a circuit base station by using existing telephone lines and ADSL communication techniques, and connecting a provider connected to the ADSL modem in the circuit base station to the ADSL communication apparatus to perform communications with each other, the ADSL communication method including the steps of:
measuring a transmission bit rate of receive data in the ADSL modem of the ADSL communication apparatus; and
when the measured transmission bit rate is lower than a target transmission bit rate, disconnecting a connection between the ADSL modem of the ADSL communication apparatus and the ADSL modem in the circuit base station and attempting reconnection.

Accordingly, it is possible to automatically set a transmission bit rate close to the maximum value thereof in accordance with the circuit state.

Additionally, according to another aspect of the present invention, there is provided an ADSL communication apparatus connecting an ADSL modem thereof to an ADSL modem in a circuit base station by using existing telephone lines and ADSL communication techniques, and connecting a provider connected to the ADSL modem in the circuit base station to the ADSL communication apparatus to perform communications with each other, the ADSL communication apparatus including:
measuring means for measuring a transmission bit rate of receive data in the ADSL modem of the ADSL communication apparatus; and
reconnection means for, when the measured transmission bit rate is lower than a target transmission bit rate, disconnecting a connection between the ADSL modem of the ADSL communication apparatus and the ADSL modem in the circuit base station and attempting reconnection.

Accordingly, it is possible to automatically set a transmission bit rate close to the maximum value thereof in accordance with the circuit state.

Additionally, the ADSL communication apparatus may further include:
target transmission bit rate setting means for setting the target transmission bit rate based on a maximum value of the transmission bit rate previously measured by the measuring means.

Accordingly, it is possible to set the target transmission bit rate close to the maximum value of the transmission bit rate.

Additionally, the ADSL communication apparatus may further include:
repeating means for repeating reconnection attempt by the reconnection means for a predetermined number of times when the transmission bit rate of receive data is measured by the measuring means after reconnection is made by the reconnection means, and the measured transmission bit rate is lower than the target transmission bit rate.

Accordingly, even in a case where the circuit state happens to be unsatisfactory when reconnection is made, it is possible to correspond to such a case.

Additionally, according to another aspect of the present invention, there is provided an ADSL communication program for connecting an ADSL modem of an ADSL communication apparatus to an ADSL modem in a circuit base station by using existing telephone lines and ADSL communication techniques, and connecting a provider connected to the ADSL modem in the circuit base station to the ADSL communication apparatus to perform communications with each other, the ADSL communication program causing a computer to function as:
measuring means for measuring a transmission bit rate of receive data in the ADSL modem of the ADSL communication apparatus; and
reconnection means for, when the measured transmission bit rate is lower than a target transmission bit rate, disconnecting a connection between the ADSL modem of the ADSL communication apparatus and the ADSL modem in the circuit base station and attempting reconnection.

Accordingly, it is possible to automatically set a transmission bit rate close to the maximum value thereof in accordance with the circuit state.

Other objects, features and advantages of the present invention will become more apparent from the following detailed description when read in conjunction with the following drawings.

### BRIEF DESCRIPTION OF THE DRAWINGS

FIG. 1 is a block diagram of an ADSL communication apparatus according to one embodiment of the present invention;
FIG. 2 is a block diagram of one embodiment of an ADSL modem; and
FIG. 3 is a flowchart of one embodiment of a communication optimizing process.

### DETAILED DESCRIPTION OF THE PREFERRED EMBODIMENTS

A description is given of an embodiment of the present invention with reference to the drawings.

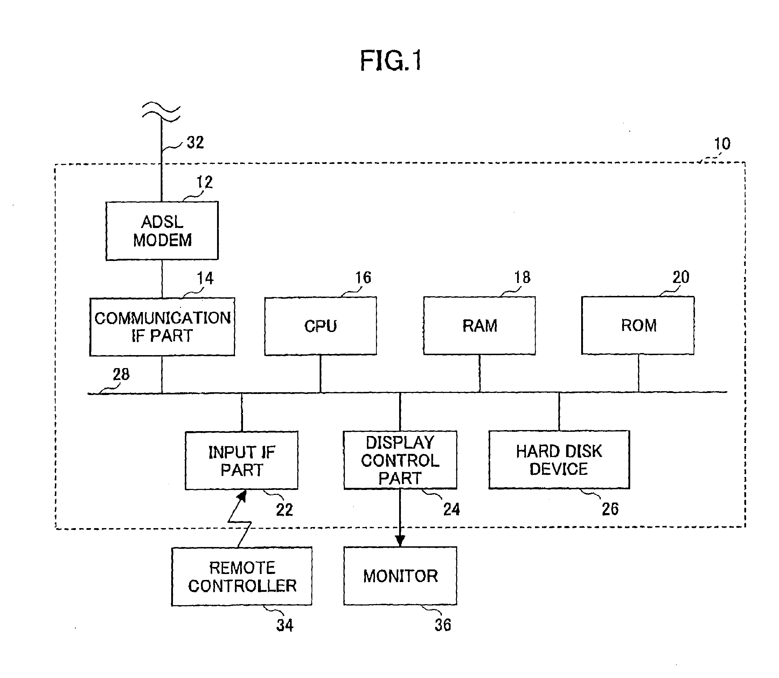

FIG. 1 is a block diagram of an ADSL communication apparatus 10 according to one embodiment of the present invention. It is assumed in this embodiment that communications are performed by using ADSL. In FIG. 1, the ADSL communication apparatus 10 includes an ADSL modem 12, a communication IF (interface) part 14, a CPU 16, a RAM 18, a ROM 20, an input IF part 22, a display control part 24, a hard disk device 26, and an internal bus 28 connected to each of the communication IF part 14, the CPU 16, the RAM 18, the ROM 20, the input IF part 22, the display control part 24, and the hard disk device 26. The ADSL communication apparatus 10 is an IP-STB, which is installed in, for example, a home or a hotel, and when a user accesses, for example, a desired Web site or streaming content by operating a remote controller, displays the screen.

The ADSL modem 12 is connected to an ADSL modem (not shown) in a circuit base station via a telephone line 32, and is also connected to the communication IF part 14 via a LAN. The communication IF part 14 interfaces the internal bus 28 with the LAN. The CPU 16 executes a program stored in the ROM 20 and controls the operation of the ADSL communication apparatus 10. On this occasion, the RAM 18 is used as a work area.

The input IF part 22 includes, for example, an infrared receiving circuit, and receives an infrared operational signal that is output from a remote controller 34. It should be noted that the remote controller 34 may be connected to the input IF part 22 by using, for example a USB. The operation input by the user with the use of the remote controller 34 is read by the CPU 16 via the input IF part 22.

According to the above operation, the CPU 16 makes the ADSL modem 12 establish a connection with the ADSL modem in the circuit base station, and performs data communications with the ISP, which is connected to the ADSL modem in the circuit base station. Thereby, IP (Internet Protocol) data supplied from the ISP are stored in the RAM 18 or the hard disk device 26, and are displayed on a monitor 36 by the display control part 24.

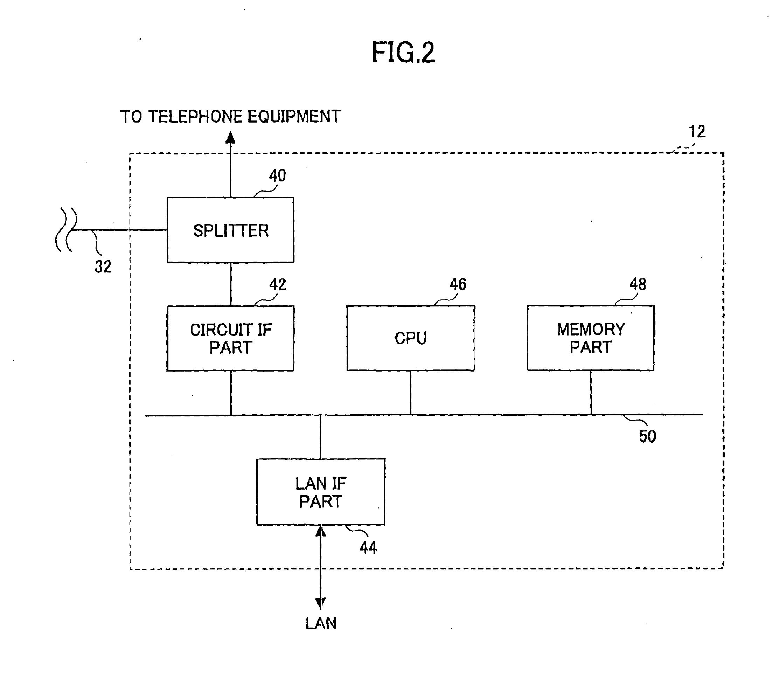

FIG. 2 is a block diagram of the ADSL modem 12 according to one embodiment. In FIG. 2, the ADSL modem 12 includes a splitter 40, a circuit IF part 42, a LAN IF part 44, a CPU 46, a memory part 48, and an internal bus 50 connected to each of the circuit IF part 42, the LAN IF part 44, the CPU 46, and the memory part 48.

The splitter 40 separates an ADSL signal (high-frequency component) input from the telephone line 32 from a telephone service signal (low-frequency component). The telephone service signal is transmitted to a telephone equipment (not shown), and the ADSL signal is transmitted to the circuit IF part 42. The circuit IF part 42 interfaces the internal bus 50 with the telephone line 32. The LAN IF part 44 interfaces the internal bus 50 with the LAN, and is connected to the communication IF part 14 via the LAN.

The CPU 46 performs a process for performing data transmission and reception between the circuit IF part 42 and the LAN IF part 44 by using the memory part 48. Also, the CPU 46 performs a training process for establishing a connection with the ADSL modem in the circuit base station at the time of starting a connection. Further, the CPU 46 constantly measures the circuit state such as the current transmission bit rate and S/N ratio of receive data that are transmitted from the ADSL modem in the circuit base station.

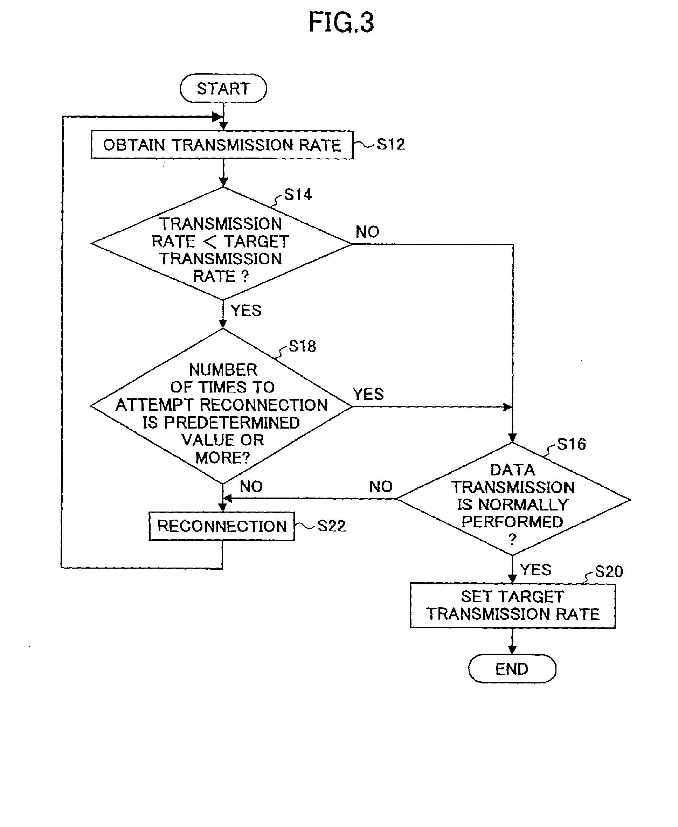

FIG. 3 is a flowchart of one embodiment of a communication optimizing process performed by the CPU 16. The process is performed in each of the following cases:
when the ADSL modem 12 is connected to the ADSL modem in the circuit base station at the time when the power of the ADSL communication apparatus 10 is turned ON; when
it becomes the clock time that is set in advance (one or more times may be set for the clock time); and when an operation to perform optimization is conducted via the remote controller 34. Here, as for the clock time that is set in advance, time (hours) such as midnight when
the user is less likely to use the ADSL communication apparatus 10 is selected. In addition, when the user is using the ADSL communication apparatus 10 at the time that is set in advance, the communication optimization process may be performed after the user ends using the ADSL communication apparatus 10.

Referring to FIG. 3, first, in step S12, the transmission bit rate (transmission rate) of receive data that are transmitted from the ADSL modem in the circuit base station is obtained from the ADSL modem 12.

Then, in step S14, the obtained transmission bit rate is compared with a target transmission bit rate (target transmission rate). The target transmission bit rate is a value obtained by multiplying the maximum value of the transmission bit rate by a constant number, or the average transmission bit rate. Here, when the obtained transmission bit rate is equal to or higher than the target transmission bit rate, the process proceeds to step S16. When the obtained transmission bit rate is lower than the target transmission bit rate, the process proceeds to step S18.

In step S16, it is determined whether the obtained transmission bit rate is equal to or higher than a predetermined threshold value and data transmission is normally performed. When the transmission bit rate is equal to or higher than the threshold value, the target transmission bit rate is set in step S20 and the process ends. As for the setting method of the target transmission bit rate, the user can select it by using, for example, the remote controller 34. The target transmission bit rate is set to one of the following values: the value obtained by multiplying the maximum value of the transmission bit rate, which is obtained after the power is turned ON, by a constant number (constant number may be, for example, about 0.7-0.9, or a value set by the user); and the average value of the transmission bit rate obtained after the power is turned ON. On the other hand, when the obtained transmission bit rate is lower than the threshold value, the process proceeds to step S22.

Further, in step S16, whether data transmission is normally performed may be determined by making access to a specific Web site that transmits fixed data, and comparing the fixed data received from the specific Web site with fixed data stored in, for example, the RAM 18 in advance.

In step S18, it is determined that whether the number of times to attempt reconnection is equal to or more than a predetermined number (for example, several times). When the number of times to attempt reconnection is less than the predetermined value, in step S22, the currently connected ADSL line is disconnected, reconnection is attempted, and the process proceeds to step S12. It should be noted that when starting the process shown in FIG. 3, the number of times to attempt reconnection is set to 0, and the number of times to attempt reconnection is incremented by 1 in step S22. When the number of times to attempt reconnection is equal to or more than the predetermined value, the process proceeds to step S16, where it is determined whether data transmission is normally performed.

In the aforementioned manner, by attempting reconnection when the transmission bit rate of receive data becomes lower than the target transmission bit rate, training for establishing a connection is performed, and the maximum transmission bit rate is set in accordance with the S/N ratio at the time. Hence, the user can connect to the Internet and access a desired Web site in the best condition.

In the above-described embodiment, the description is given by assuming that the communication optimizing process shown in FIG. 3 is performed by the CPU 16. However, the communication optimizing process may be performed by the CPU 46 in the ADSL modem 12.

It should be noted that step S12 corresponds to measuring means, step S22 corresponds to reconnection means, step S20 corresponds to target transmission bit rate setting means, and step S18 corresponds to repeating means.

The present invention is not limited to the specifically disclosed embodiments, and variations and modifications may be made without departing from the scope of the present invention.

## Claims

1. An ADSL communication method of connecting an ADSL modem of an ADSL communication apparatus to an ADSL modem in a circuit base station by using existing telephone lines and ADSL communication techniques, and connecting a provider connected to the ADSL modem in the circuit base station to the ADSL communication apparatus to perform communications with each other,
**characterized by** the steps of:
measuring a transmission bit rate of receive data in the ADSL modem of the ADSL communication apparatus; and
when the measured transmission bit rate is lower than a target transmission bit rate, disconnecting a connection between the ADSL modem of the ADSL communication apparatus and the ADSL modem in the circuit base station and attempting reconnection.

2. An ADSL communication apparatus connecting an ADSL modem thereof to an ADSL modem in a circuit base station by using existing telephone lines and ADSL communication techniques, and connecting a provider connected to the ADSL modem in the circuit base station to the ADSL communication apparatus to perform communications with each other, said ADSL communication apparatus comprising:
measuring means for measuring a transmission bit rate of receive data in the ADSL modem of the ADSL communication apparatus; and
reconnection means for, when the measured transmission bit rate is lower than a target transmission bit rate, disconnecting a connection between the ADSL modem of the ADSL communication apparatus and the ADSL modem in the circuit base station and attempting reconnection.

3. The ADSL communication apparatus as claimed in claim 2, further comprising:
target transmission bit rate setting means for setting the target transmission bit rate based on a maximum value of the transmission bit rate previously measured by the measuring means.

4. The ADSL communication apparatus as claimed in claim 3, further comprising:
repeating means for repeating reconnection attempt by the reconnection means for a predetermined number of times when the transmission bit rate of receive data is measured by the measuring means after reconnection is made by the reconnection means, and the measured transmission bit rate is lower than the target transmission bit rate.

5. The ADSL communication apparatus as claimed in claim 2, further comprising:
repeating means for repeating reconnection attempt by the reconnection means for a predetermined number of times when the transmission bit rate of receive data is measured by the measuring means after reconnection is made by the reconnection means, and the measured transmission bit rate is lower than the target transmission bit rate.

6. An ADSL communication program for connecting an ADSL modem of an ADSL communication apparatus to an ADSL modem in a circuit base station by using existing telephone lines and ADSL communication techniques, and connecting a provider connected to the ADSL modem in the circuit base station to the ADSL communication apparatus to perform communications with each other,
**characterized in that**:
said ADSL communication program causing a computer to function as:
measuring means for measuring a transmission bit rate of receive data in the ADSL modem of the ADSL communication apparatus; and
reconnection means for, when the measured transmission bit rate is lower than a target transmission bit rate, disconnecting a connection between the ADSL modem of the ADSL communication apparatus and the ADSL modem in the circuit base station and attempting reconnection.
